Europäisches Patentamt

European Patent Office

Office européen des brevets

(11) Publication number: **0 268 712**
**A1**

(12) **EUROPEAN PATENT APPLICATION**

(21) Application number: **86309228.4**

(22) Date of filing: **26.11.86**

(51) Int. Cl.⁴: **H04R 1/02 , G11B 25/06**

(43) Date of publication of application:
**01.06.88 Bulletin 88/22**

(84) Designated Contracting States:
**AT BE CH DE ES FR GB GR IT LI NL SE**

(71) Applicant: **COTRON CORPORATION**
**7th Floor No. 5-1, Nan King West Road**
**Taipei(TW)**

(72) Inventor: **Hsin Hung, Cheng**
**7TH FL., no. 5-1 Nan King West Rd**
**Taipei(TW)**

(74) Representative: **Hallam, Arnold Vincent**
**E.N. LEWIS & TAYLOR 144 New Walk**
**Leicester LE1 7JA(GB)**

(54) **A stereo speaker system.**

(57) A stereo speaker system comprises a body (1) shaped in the form of a cassette with an integral 2-channel jack plug (4) which is rotatable between an extended position and a retracted position in which the plug is located inside the body. The plug (4) is connected to an electro-acoustic transducer of generally planar construction formed by a magnet assembly (2) and a driving element system (3).

fig.2

EP 0 268 712 A1

## A STEREO SPEAKER SYSTEM

### BACKGROUND OF THE INVENTION

This invention relates to a stereo speaker system and particularly but not exclusively, to a speaker system for a Sony "Walkman" type of personal cassette player.

As is well known, conventional loud speakers occupy a large space and often have a considerable weight. In current portable personal cassette players, normally only earphones are connected through a jack plug to the player. If a user wants to connect a pair of speakers to the cassette player for listening pleasure, the combination of player plus speakers can only be placed at a given location, being incapable of providing the usual mobility of a personal cassette player.

### SUMMARY OF THE INVENTION

In view of the drawbacks of the conventional speakers. it is an object of this invention to provide a small and light speaker to be used with a personal stereo player which will not interfere with the mobility of such a player.

According to the present invention there is provided a stereo speaker system comprising a case supporting an electro-acoustic transducer and an integral pivotal jack plug movable between an extended and a retracted position and arranged to interconnect the electro-acoustic transducer to an electrical audio signal source, said case being recessed to accommodate the plug in the retracted position thereof and said case being shaped in the form of a cassette.

### BRIEF DESCRIPTION OF THE DRAWINGS

The invention will now be described by way of example with reference to the accompanying drawings in which:-

Fig. I is a perspective view of a stereo speaker system according to the present invention;

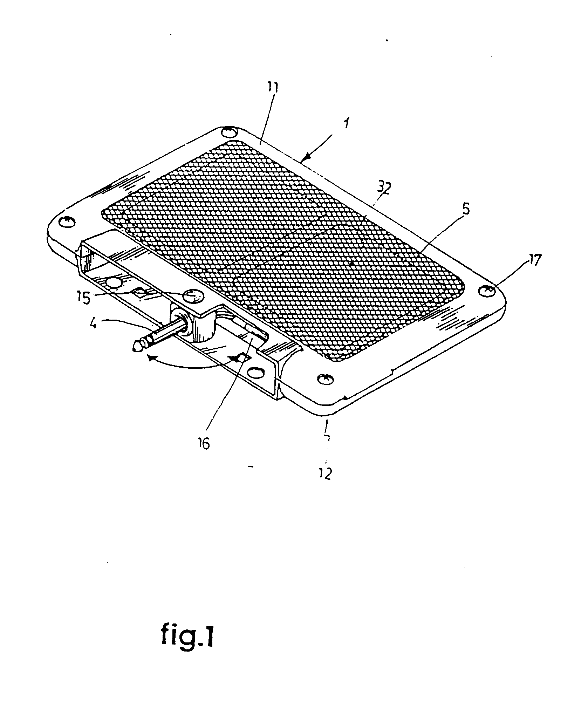

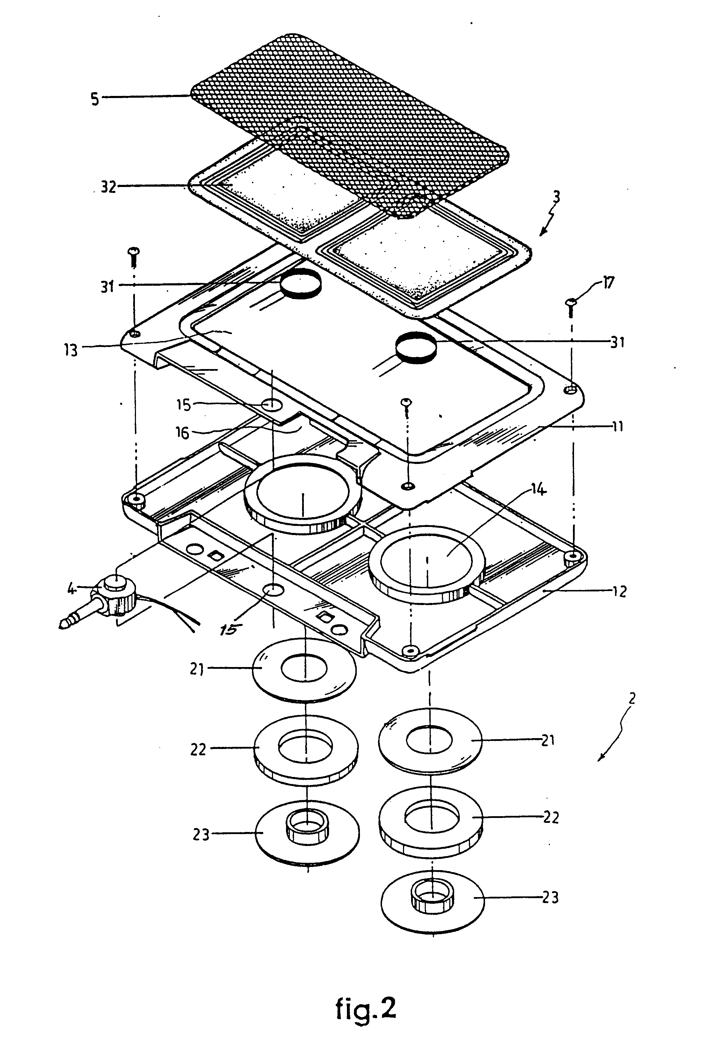

Fig. 2 is an exploded view of the system shown in Fig. I.

### DETAILED DESCRIPTION OF A PREFERRED EMBODIMENT

As shown in Figs. I and 2, the present invention comprises a case I shaped like a cassette, and supporting a magnet assembly 2, a driving element system 3, a 2-channel plug 4, and a screen 5. The case I includes an upper case portion II having a rectangular aperture I3 and a lower case portion I2 in which is located two circular apertures I4. The magnet assembly comprises, for each stereo channel a ferrite magnet 22 fixedly mounted, with epoxy resin, between a yoke iron 2I and a centre magnet 23, and each assembly is mounted in a respective one of the apertures I4 by, for example, adhesive. The driving element system 3 has a voice coil 34 associated with each magnet assembly and a vibratable sheet 32, the parts being secured with adhesive in the rectangular aperture I3 of the upper case portion II. An integral 2-channel jack having upper and lower lugs is pivotally located by the lugs in holes I5 in the upper and lower case portions, the plug 4 being rotatable through 90° from a retracted position in which it is located inside the case to an extended position 90° with respect to the case. The front edge of the upper case portion II is furnished with a cutaway portion I6 for gripping the plug 4. The leads associated with each channel of plug 4 are connected to the appropriate two leads of the respective voice coils 3I. The upper and lower case portions II and I2 are assembled together with screws I7. Finally, the screen 5 is adhered on the top side of the upper case portion II for protecting the vibrating sheet 32 so that it will be seen a generally planar electro-acoustic transducer is provided.

Briefly, since the present invention has a simple structure, and a compact dimensions, it is portable and convenient to a user.

### Claims

I. A stereo speaker system comprising a case (I) supporting an electro-acoustic transducer (2, 3) and an integral pivotal jack plug (4) movable between an extended and a retracted position and arranged to interconnect the electro-acoustic transducer to an electrical audio signal source, said case being recessed to accommodate the plug in the retracted position thereof and said case being shaped in the form of a cassette.

2. A system as claimed in claim I, wherein the jack plug is rotatable through an angle of 90°.

3. A system as claimed in claim I or 2, wherein the case comprises an upper portion (II) and a lower portion (I2) and the electro-acoustic transducer comprises a magnet assembly (2) secured in the lower portion (I2) and a driving element system (3) secured in the upper portion (II) to provide a transducer of generally planar form.

4. A system as claimed in claim 3, wherein the magnet assembly (2) comprises for each channel ferrite magnet (22) secured between a yoke iron (2I) and a centre magnet (23) and the driving element system (3) comprises a voice coil (3I) for each channel and a vibratable sheet (32).

fig.1

fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 9, no. 165 (E-327)[1888], 10th July 1985; & JP-A-60 41 396 (MATSUSHITA DENKI SANGYO K.K.) 05-03-1985 * Whole abstract * | 1 | H 04 R 1/02 G 11 B 25/06 |
| A | US-A-4 303 807 (M. SATO) * Figures; claims * | 1 | |
| A | FR-A-2 375 784 (DIMAG AG OBERWIL) * Figures; claims * | 1,2 | |
| A | GB-A-2 098 821 (WON YUK-CHING) * Figures; abstract * | 1 | |

TECHNICAL FIELDS SEARCHED (Int. Cl.4)

H 04 R
G 11 B

The present search report has been drawn up for all claims

| Place of search | Date of completion of the search | Examiner |
|---|---|---|
| THE HAGUE | 14-07-1987 | MINNOYE G.W. |